# EUROPÄISCHE PATENTANMELDUNG

(11) **EP 4 763 618 A1**
(43) Veröffentlichungstag der Anmeldung: **24.06.2026**
(21) Anmeldenummer: 25224027.0
(22) Anmeldetag: 16.12.2025
(51) Int. Cl.: B60Q 1/26, F21S 43/14, F21S 43/20, F21S 43/31, F21S 43/40, F21S 43/00, F21S 45/48, F21S 41/675

(54) **KRAFTFAHRZEUG MIT EINER BELEUCHTUNGSEINRICHTUNG UND ENTSPRECHENDE BELEUCHTUNGSEINRICHTUNG**

(30) Priorität: 23.12.2024 DE 102024139591
(71) Anmelder: AUDI Aktiengesellschaft, 85057 Ingolstadt (DE)
(72) Erfinder: Büdel, Berthold, 85051 Ingolstadt (DE); Scheuchenpflug, Johannes, 85107 Baar-Ebenhausen (DE)
(74) Vertreter: Lindner Blaumeier Patent- und Rechtsanwälte

(57) **Zusammenfassung**

Kraftfahrzeug (1), umfassend eine Beleuchtungseinrichtung (2, 3, 4) mit wenigstens einem Leuchtmittel (17) zur Generierung von Licht (18), wobei das wenigstens eine Leuchtmittel (17) mit wenigstens einer fahrzeugseitigen Kühlkomponente (26) des Kraftfahrzeugs (1) derart thermisch verbunden ist, dass zur Kühlung des wenigstens einen Leuchtmittels (17) Wärme von dem wenigstens einen Leuchtmittel (17) zu der wenigstens einen Kühlkomponente (26) ableitbar ist.

## Beschreibung

Die vorliegende Erfindung betrifft ein Kraftfahrzeug, umfassend eine Beleuchtungseinrichtung mit wenigstens einem Leuchtmittel zur Generierung von Licht.

Originär dienen Beleuchtungseinrichtungen bei Kraftfahrzeugen insbesondere bei Dunkelheit den Zwecken, einerseits eine Umgebung des Kraftfahrzeugs zu beleuchten, andererseits das Kraftfahrzeug jedoch auch für andere Verkehrsteilnehmer besser sichtbar zu machen.

Bei modernen Kraftfahrzeugen erfüllen Beleuchtungseinrichtungen Zwecke, die über die eben genannten Aspekte weit hinausgehen. Beispielsweise werden mittels Beleuchtungseinrichtungen Projektionen im Umfeld des Kraftfahrzeugs, insbesondere auf den Boden, erzeugt.

So offenbart etwa DE 10 2018 132 392 A1 eine in einem Türschweller des Kraftfahrzeugs verbaute Beleuchtungsvorrichtung, die ein Leuchtmittel, einen Lichtmodulator, eine Projektionslinse und einen beweglichen Spiegel umfasst, wobei diese Komponenten in einem gemeinsamen Gehäuse verbaut sind.

Aus DE 20 2015 104 894 U1 ist eine Beleuchtungseinrichtung für ein Kraftfahrzeug bekannt, die in einer Karosserieverkleidung, einer Stoßstange oder einer Fahrzeugtür verbaut ist. Die Beleuchtungseinrichtung umfasst ein Leuchtmittel, Linsen, ein Maskenmittel zur Darstellung eines Logos und eine Reflektoreinheit, über das mittels des Leuchtmittels erzeugte Licht auf eine Projektionsfläche umgelenkt wird.

Ein Problem im Zusammenhang mit einem Leuchtmittel bei einer solchen Beleuchtungseinrichtung besteht darin, dass dieses Wärme erzeugt. Diesbezüglich ist darauf zu achten, dass eine entsprechend entstehende Temperatur keine Temperaturschwelle erreicht, bei deren Übersteigen eine Beschädigung des Leuchtmittels oder anderer Komponenten der Beleuchtungseinrichtung eintreten könnte. Um dem zu begegnen, ist häufig eine Abregelung der Leuchtmittels vorgesehen, in deren Rahmen eine Helligkeit oder Leistung des Leuchtmittels und mithin eine entstehende Wärme reduziert wird. Dies wiederum führt zu einer Reduktion der Helligkeit des mittels der Beleuchtungseinrichtung generierten Lichts, was nachteilig hinsichtlich der seitens des Nutzers mittels der Beleuchtungseinrichtung zu realisierenden Funktion ist.

Die Erfindung stellt sich die Aufgabe, ein verbessertes Konzept bezüglich einer Beleuchtungseinrichtung für ein Kraftfahrzeug anzugeben, insbesondere hinsichtlich einer aufgrund eines Leuchtmittels der Beleuchtungseinrichtung entstehenden Wärme.

Erfindungsgemäß gelöst wird die Aufgabe bei einem Kraftfahrzeug der eingangs genannten Art dadurch, dass das wenigstens eine Leuchtmittel mit wenigstens einer fahrzeugseitigen Kühlkomponente des Kraftfahrzeugs derart thermisch verbunden ist, dass zur Kühlung des wenigstens einen Leuchtmittels Wärme von dem wenigstens einen Leuchtmittel zu der wenigstens einen Kühlkomponente ableitbar ist.

Im Rahmen der vorliegenden Erfindung wird vorteilhaft realisiert, dass ein aufgrund der Ableitung der Wärme entstehender und das Leuchtmittel betreffender Kühleffekt eine Zeitdauer nach dem Einschalten des Leuchtmittels, bis zu der die eingangs genannte Abregelung erforderlich wird, signifikant erhöht wird, oder dass das Erfordernis dieser Abregelung komplett hinfällig wird. Die Erfindung beruht auf dem Gedanken, dass dieser Kühleffekt signifikant, insbesondere komplett, durch die thermische Verbindung des Leuchtmittels mit der Kühlkomponente realisiert wird. Anders ausgedrückt fließt ein signifikanter Anteil, insbesondere ein Großteil, der von dem Leuchtmittel erzeugten Wärme zur Kühlkomponente hin ab. Bevorzugt ist die Kühlkomponente ein ohnehin im Kraftfahrzeug vorgesehenes Bauteil. Die Kühlkomponente kann ein fahrzeugfest angeordnetes Bauteil sein. Die Kühlkomponente kann aus einem Material bestehen und eine Masse aufweisen, sodass eine Wärmekapazität der Kühlkomponente hinreichend hoch ist, um eine zur Erzielung des Effekts, dass die Kühlkomponente eine ausreichende Wärmemenge aufzunehmen vermag und diese gegebenenfalls, insbesondere in die Umgebung, abzuleiten.

Die thermische Verbindung zwischen dem Leuchtmittel und der Kühlkomponente erlaubt einen für den genannten Zweck hinreichend hohen Fluss von Wärme respektive Wärmestrom von dem Leuchtmittel zu der Kühlkomponente. Hierbei kann die Wärmeübertragung bevorzugt über wenigstens einen unmittelbaren Berührkontakt ermöglicht werden. Die Wärmeübertragung erfolgt somit bevorzugt, insbesondere ausschließlich, vermittels einer Kontaktübertragung zwischen dem Leuchtmittel und der Kühlkomponente und gegebenenfalls wenigstens einer weiteren, zwischen dem Leuchtmittel und der Kühlkomponente angeordneten Komponente, die entsprechend mit dem Leuchtmittel sowie der Kühlkomponente thermisch verbunden ist.

Die Kühlkomponente und gegebenenfalls eine zwischen dem Leuchtmittel und der Kühlkomponente angeordneten Komponente besteht bevorzugt aus einem Metall, da Metalle besonders hohe Wärmeübertragungskoeffizienten aufweisen. Zur weiteren Erhöhung des Wärmestroms kann zwischen Teilen, mittels denen die thermische Verbindung ausgebildet wird, eine Wärmeleitpaste angeordnet sein.

Bevorzugt weist die Beleuchtungseinrichtung ein Gehäuse auf, in dem das wenigstens eine Leuchtmittel aufgenommen ist. Das Gehäuse kann aus einem Metall bestehen. Das Gehäuse kann quader- oder boxförmig ausgebildet sein. Das Gehäuse kann mehrere, insbesondere ebene, Wände aufweisen. Das Leuchtmittel und gegebenenfalls weitere Komponenten der Beleuchtungseinrichtung sind in einem Inneren des Gehäuses aufgenommen, sodass diese Komponenten vor unerwünschten Einflüssen von außen, beispielsweise Verschmutzungen oder Nässe, geschützt sind. Da sich das Leuchtmittel im Inneren des Gehäuses befindet, umfasst das Gehäuse bevorzugt wenigstens eine Austrittsöffnung oder ein Austrittsfenster, über die oder das das mittels des Leuchtmittels erzeugte Licht nach außen austritt.

Gemäß dieser Ausführungsform kann die Ableitung der Wärme dadurch realisiert oder verstärkt werden, dass das wenigstens eine Leuchtmittel und die Kühlkomponente und/oder eine mit der Kühlkomponente thermisch verbundene Komponente, über die die Ableitung der Wärme von dem wenigstens einen Leuchtmittel zu der wenigstens einen Kühlkomponente erfolgt, gegenüberliegend an einer Wand des Gehäuses angeordnet sind. Die Wand bildet eine dem Inneren des Gehäuses zugewandte Innenfläche und eine dem äußeren des Gehäuses zugewandte Außenfläche, wobei das Leuchtmittel mit der Innenfläche und die Kühlkomponente mit der Außenfläche in thermischem Kontakt stehen. Das Gehäuse respektive zumindest diese Wand des Gehäuses bestehen bevorzugt aus einem Metall oder einem anderen Material mit einer hinreichend hohen Wärmeleitfähigkeit.

Zudem oder alternativ kann die Ableitung der Wärme dadurch realisiert oder verstärkt werden, dass das Gehäuse zu wenigstens einer Seite hin offen ist, wobei das wenigstens eine, mit der Kühlkomponente und/oder mit der oder einer mit der Kühlkomponente thermisch verbundenen Komponente, über die die Ableitung der Wärme von dem wenigstens einen Leuchtmittel zu der wenigstens einen Kühlkomponente erfolgt, in, insbesondere unmittelbarem, Berührkontakt stehende Leuchtmittel im Bereich der offenen Seite angeordnet ist. Im Gegensatz zur vorher erläuterten Ausführungsform wird eine Komponente zwischen dem Leuchtmittel und der Kühlkomponente, über die die Wärmeübertragung erfolgt, nämlich die Wand, vermieden, sodass die Wärmeübertragung noch effektiver erfolgen kann. Bezüglich der Befestigung des Leuchtmittels kann vorgesehen sein, dass dieses an einer Wand des Gehäuses oder Tragstruktur der Beleuchtungseinrichtung befestigt ist. Zusätzlich kann das Leuchtmittel an der Kühlkomponente und/oder an der oder einer mit der Kühlkomponente thermisch verbundenen Komponente befestigt sein. Da aufgrund der offenen Seite des Gehäuses die eigentlich vorgesehene Schutzwirkung des Gehäuses grundsätzlich verringert werden könnte, ist denkbar, dass die offene Seite mittels der Kühlkomponente und/oder wenigstens einer weiteren Komponente des Kraftfahrzeugs verschlossen wird, respektive dass die offene Seite hierdurch abgedeckt wird.

Denkbar ist, dass die Ableitung der Wärme dadurch realisiert oder verstärkt wird, dass das wenigstens eine Leuchtmittel und/oder die Beleuchtungseinrichtung mittels wenigstens eines Befestigungsmittels an der Kühlkomponente und/oder der oder einer mit der Kühlkomponente thermisch verbundenen Komponente, über die die Ableitung der Wärme von dem wenigstens einen Leuchtmittel zu der wenigstens einen Kühlkomponente erfolgt, befestigt ist. Das Befestigungsmittel erfüllt vorliegend synergetisch zwei Zwecke, nämlich einerseits die mechanische Fixierung der Beleuchtungseinrichtung respektive des Leuchtmittels, nämlich über die mechanische Anbindung an die Kühlkomponente, und andererseits eine Realisierung oder Vergrößerung respektive Verstärkung der zwischen dem Leuchtmittel und der Kühlkomponente vorhandenen Wärmebrücke.

Das wenigstens eine Befestigungsmittel kann wenigstens eine Schraube, insbesondere aus einem Metall, sein. So kann das Gehäuse und die Kühlkomponente beziehungsweise die mit der Kühlkomponente thermisch verbundene Komponente jeweils eine Bohrung aufweisen, die miteinander fluchten und die von der Schraube durchsetzt werden. Wenigstens eine dieser Bohrungen kann ein in ein Außengewinde der Schraube eingreifendes Innengewinde aufweisen. Zudem oder alternativ kann das wenigstens eine Befestigungsmittel als eine, insbesondere metallene, Niete und/oder eine Schweißstelle respektive -raupe vorliegen.

Das wenigstens eine Befestigungsmittel kann eine Haltevorrichtung sein, die insbesondere aus einem Metall besteht. Die Haltevorrichtung dient als eine mechanische Schnittstelle zwischen dem Leuchtmittel und der Kühlkomponente beziehungsweise der mit der Kühlkomponente thermisch verbundenen Komponente. Die Haltevorrichtung kann ein entsprechend geformtes oder gebogenes Metallblech aufweisen. Die Haltevorrichtung kann einerseits mit dem Leuchtmittel und andererseits mit der Kühlkomponente beziehungsweise der mit der Kühlkomponente thermisch verbundenen Komponente verbunden sein. Die Haltevorrichtung kann das Leuchtmittel tragen, wobei das Leuchtmittel an der Haltevorrichtung mittels eines Befestigungsmittels wie beispielsweise einer Schraube befestigt ist oder von einem Abschnitt der Haltevorrichtung, insbesondere klammerartig, umgriffen wird. Die Haltevorrichtung kann an der Kühlkomponente beziehungsweise der mit der Kühlkomponente thermisch verbundenen Komponente befestigt sein, wobei hierzu insbesondere ein Befestigungsmittel wie beispielsweise eine Schraube vorgesehen sein kann. Zudem kann ein Abschnitt der Haltevorrichtung die Kühlkomponente beziehungsweise die mit der Kühlkomponente thermisch verbundene Komponente, insbesondere klammerartig, umgreifen.

Denkbar ist auch, dass die Ableitung der Wärme dadurch realisiert oder verstärkt wird, dass die Beleuchtungseinrichtung wenigstens einen Flansch aufweist, der mit der Kühlkomponente und/oder mit der oder einer mit der Kühlkomponente thermisch verbundenen Komponente, über die die Ableitung der Wärme von dem wenigstens einen Leuchtmittel zu der wenigstens einen Kühlkomponente erfolgt, in, insbesondere unmittelbarem, Berührkontakt steht. Durch den Flansch wird eine entsprechend vorliegende Kontaktfläche vergrößert, was der Wärmeübertragung weiter zuträglich ist. Der Flansch kann ein Teil des Gehäuses seien oder bilden. So ist denkbar, dass der Flansch, insbesondere gerade und bündig, von einer Wand des Gehäuses absteht, die mit der Kühlkomponente beziehungsweise mit der mit der Kühlkomponente thermisch verbundenen Komponente in Berührkontakt steht, sodass auch der Flansch hiermit in Berührkontakt steht. Bevorzugt ist die Beleuchtungseinrichtung über den Flansch an der Kühlkomponente beziehungsweise an der mit der Kühlkomponente thermisch verbundenen Komponente befestigt. So kann die oben im Zusammenhang mit der seitens der Beleuchtungseinrichtung vorliegenden Bohrung zur Aufnahme der Schraube vorgesehen sein, dass diese den Flansch durchsetzt. Auch kann die genannte Schweiß- und/oder Nietverbindung im Bereich des Flansches ausgebildet sein.

Bevorzugt wird der aufgrund der Ableitung der Wärme entstehende Kühleffekt dadurch verstärkt, dass die Kühlkomponente und/oder die oder eine mit der Kühlkomponente thermisch verbundene Komponente, über die die Ableitung der Wärme von dem wenigstens einen Leuchtmittel zu der wenigstens einen Kühlkomponente erfolgt, wenigstens ein Kühlelement umfasst, mittels der die Wärme an ein Kühlfluid, das insbesondere eine Umgebungsluft ist oder in einer aktiven Kühlung des Kraftfahrzeugs eingebunden ist, abgebbar ist. Im Rahmen dieser Ausführungsform wird mithin nicht nur die Wärmeabsorptionsfähigkeit des Kühlelements allein zur Realisierung des Kühleffekts genutzt, sondern es erfolgt zudem eine Abführung von Wärme zum Kühlfluid. Hierbei kann das Kühlelement derart geometrisch ausgeformt sein, dass eine möglichst große Kontaktfläche zwischen dem Kühlelement und dem Kühlfluid vorhanden ist. Insbesondere kann das wenigstens eine Kühlelement wenigstens eine Kühlfinne und/oder wenigstens eine Kühlrippe sein oder umfassen. Bezüglich des Kühlfluids kann vorgesehen sein, dass dieses, insbesondere aufgrund von Fahrtwind, eine an dem Kühlelement entlangströmende Umgebungsluft ist. Alternativ kann das Kühlfluid, dass in diesem Fall gasförmig oder flüssig sein kann, in ein aktives Kühlsystem des Kraftfahrzeugs, beispielsweise einem Kühlkreislauf, eingebunden ist.

Die Kühlkomponente kann ein Abschnitt oder eine Komponente einer Karosserie des Kraftfahrzeugs sein. Insbesondere da die Karosserie den Großteil der mechanischen Festigkeit des Kraftfahrzeugs realisiert, erfüllt diese auch die an die die im Rahmen der vorliegenden Erfindung vorgesehenen Erfordernisse an die Kühlkomponente, also insbesondere betreffend die oben genannte, hinreichende Wärmekapazität. So besteht die Karosserie typischerweise einerseits aus einem Metall und weist zudem andererseits ein hinreichend hohes Gewicht auf, um einen ausreichenden Kühleffekt für das Leuchtmittel zu realisieren.

Bevorzugt ist die Kühlkomponente ein Fahrzeugschweller. Bevorzugt handelt es sich hierbei um einen in Fahrzeuglängsrichtung erstreckenden Fahrzeugbeziehungsweise Türschweller, der sich im Wesentlichen geradlinig unterhalb der seitlichen Tür- respektive Einstiegsbereiche des Kraftfahrzeuges erstreckt. Der Fahrzeugschweller ist typischerweise als ein, insbesondere metallenes, Strangpressprofil realisiert. So kann die Beleuchtungseinrichtung an den oder in dem Fahrzeugschweller angeordnet, insbesondere hieran befestigt, sein. Eine konkrete Verbauposition der Beleuchtungseinrichtung kann sich hierbei unterhalb einer Fahrzeugsäule, beispielsweise unterhalb einer A-, B- oder C-Säule, befinden.

Denkbar ist auch, dass die Kühlkomponente ein Stoßfänger des Kraftfahrzeugs ist. Ein Stoßfänger, der beispielsweise auch als Stoßstange bezeichnet werden kann, erstreckt sich typischerweise front- oder heckseitig am Kraftfahrzeug entlang einer Fahrzeugquerrichtung und dient dazu, im Crashfall auftretende Stöße abzufangen. Somit ist auch bezüglich des Stoßfängers die Verwendung eines Metalls als Werkstoff vorgesehen, sodass auch hier die im Rahmen der vorliegenden Erfindung vorgesehenen Erfordernisse an die Kühlkomponente erfüllt sind. Bevorzugt ist die Beleuchtungseinrichtung an oder in dem Stoßfänger angeordnet, insbesondere hieran befestigt. Besonders bevorzugt ist die Beleuchtungseinrichtung, bezogen auf die Fahrzeugquerrichtung, mittig am oder im Stoßfänger angeordnet.

Bevorzugt ist die Kühlkomponente mittels eines Verkleidungsteils, bestehend insbesondere aus einem Kunststoff, verkleidet, wobei die Beleuchtungseinrichtung zwischen der Kühlkomponente und dem Verkleidungsteil oder einem Abschnitt des Verkleidungsteils, insbesondere einer Wandung des Verkleidungsteils, angeordnet ist. Anders ausgedrückt bedeckt respektive verkleidet das Verkleidungsteil nicht nur die Kühlkomponente, sondern auch die Beleuchtungseinrichtung, was einerseits hinsichtlich ästhetischer Aspekte, andererseits aber auch hinsichtlich eines zusätzlichen mechanischen Schutzes der Beleuchtungseinrichtung zuträglich ist. Das Verkleidungsteils kann eine eine Öffnung oder ein Fenster bildende Ausnehmung aufweisen, durch die das von der Beleuchtungseinrichtung abgestrahlte Licht nach außen austritt. Hierzu ist bevorzugt vorgesehen, dass die Austrittsöffnung beziehungsweise das Austrittsfenster der Beleuchtungseinrichtung und die Ausnehmung des Verkleidungsteils, bezogen auf eine Ausbreitungsrichtung des Lichts, miteinander fluchten.

Bevorzugt ist die Beleuchtungseinrichtung eine Projektionseinrichtung, mittels der eine Projektion auf einer Projektionsfläche in einer Umgebung des Kraftfahrzeugs erzeugbar ist. Bei der, insbesondere farbigen, Projektion kann es sich um ein Bild, eine Animation oder einen Film handeln. Die Projektionsfläche kann eine in der Umgebung des Kraftfahrzeugs vorhandene Wand sein. Besonders bevorzugt ist die Projektionseinrichtung eine Bodenprojektionseinrichtung ist, mittels der eine Projektion auf einem Boden in der Umgebung des Kraftfahrzeugs erzeugbar ist. Eine entsprechende Bodenprojektionseinrichtung wird häufig im Zusammenhang mit der Realisierung eines Coming- oder Leaving-Home-Szenarios verwendet. Besonders bevorzugt wird die Projektion auf dem Boden vor, hinter oder neben dem Kraftfahrzeug generiert. Der horizontale Abstand zwischen dem Fahrzeug und der Projektion respektive der Darstellungsfläche beziehungsweise des Aufsetzpunktes der Projektion kann bevorzugt max. 0,3 m betragen. Insbesondere durch diese Maßnahme kann der Urheber der Projektion, also das Kraftfahrzeug, für andere Verkehrsteilnehmer verständlich gemacht werden. Der maximale Abstand zwischen dem Fahrzeug und der Projektion kann zwischen 0,1 m und 5,0 m, insbesondere zwischen 0,5 m und 2,0 m betragen, bevorzugt 1,0 m.

Denkbar ist, dass das wenigstens eine Leuchtmittel bezüglich der Kühlkomponente ortsfest angeordnet ist. Die ortsfeste Anbindung wird insbesondere dadurch realisiert, dass das Leuchtmittel unmittelbar an der Kühlkomponente und/oder der oder einer mit der Kühlkomponente thermisch verbundenen Komponente befestigt ist. Insbesondere gegenüber Ausgestaltungen, bei denen das Leuchtmittel, etwa zur Realisierung einer Umpositionierung der mittels der Beleuchtungseinrichtung erzeugbaren Projektion, beweglich angeordnet ist, ist die ortsfeste Anordnung des Leuchtmittels zur Realisierung einer möglichst effektiven Kühlwirkung mittels der Kühlkomponente besonders vorteilhaft. So ermöglicht die ortsfeste Anordnung des Leuchtmittels eine möglichst effektive, thermische Anbindung an die Kühlkomponente in sämtlichen Betriebssituationen, die nicht durch das Wegbewegen des Leuchtmittels aus dieser Stellung aufgehoben werden kann.

Insbesondere im Rahmen der vorgenannten Ausführungsform der Erfindung ist denkbar, dass das wenigstens eine Leuchtmittel und eine Bildgebereinheit eine bezüglich der Kühlkomponente ortsfest angeordnete Bildgebereinrichtung der Beleuchtungseinrichtung bilden, mittels der eine anhand des Lichts realisierte Bilddarstellung, die insbesondere die oder eine Projektion realisiert, erzeugbar ist. Der Laufweg des die Bilddarstellung realisierenden Lichts kann, wie nachfolgend noch beschrieben wird, mittels einer Optikeinheit beeinflussbar sein. Die Bildgebereinheit kann ein Mikrospiegelaktor sein. Unter einem Mikrospiegelaktor, der häufig auch als ein sogenanntes digital-mirror-device oder DMD bezeichnet wird, ist ein mikroelektromechanisches Bauelement zur dynamischen Modulation des mittels des Leuchtmittels erzeugten Lichts zu verstehen. Entsprechende Bilddarstellung respektive Projektionen können mithin mittels des Mikrospiegelaktors erzeugt werden. Der Mikrospiegelaktor umfasst bevorzugt matrixförmig angeordnete Mikrospiegel mit einer Kantenlänge in der Größenordnung von Mikrometern. Die Mikrospiegel lassen sich bezüglich ihrer Stellung einzeln verstellen, insbesondere mittels der Kraftwirkung elektrostatischer Felder. Die Bildgebereinheit kann zudem ein TFT-Element oder ein LCOS-Element oder ein MEMS-Spiegel sein.

Denkbar ist, dass eine Änderung der Abstrahlrichtung des mittels der Beleuchtungseinrichtung generierten Lichts gewünscht ist, insbesondere zur Änderung der Position der Projektion. Insbesondere um dies zu ermöglichen, kann erfindungsgemäß vorgesehen sein, dass eine Abstrahlrichtung des mittels des wenigstens einen Leuchtmittels generierten Lichts mittels wenigstens einer bezüglich der Kühlkomponente positionsveränderbaren und/oder schwenkbaren Optikeinheit, mittels der ein Laufweg des Lichts beeinflussbar ist, beeinflussbar ist. Im Rahmen dieser Ausführungsform sind mithin lediglich Komponenten der Beleuchtungseinrichtung positionsveränderbar respektive schwenkbar vorgesehen, die keiner Kühlung bedürfen und für die diese Ausgestaltung mithin diesbezüglich unproblematisch ist. So ist konkret im Rahmen dieser Ausführungsform vorgesehen, dass das Leuchtmittel beziehungsweise die Bildgebereinrichtung ortsfest angeordnet ist, sodass eine Abstrahlrichtung des Lichts von dem Leuchtmittel stets dieselbe ist. Eine Beeinflussung der Ausbreitungsrichtung des Lichts erfolgt nun mittels der Optikeinheit, die zu diesem Zweck mit einem ansteuerbaren, insbesondere elektromechanischen, Aktor verbunden ist. Zur Generierung entsprechender Steuersignale kann eine Steuerungseinrichtung der Beleuchtungseinrichtung beziehungsweise des Kraftfahrzeuges vorgesehen sein.

Die Änderung der Abstrahlrichtung des mittels der Beleuchtungseinrichtung generierten Lichts ist insbesondere dann gewünscht, wenn das Kraftfahrzeug Luftfedern aufweist, mittels denen eine Höhenjustage des Kraftfahrzeugs vorgenommen werden kann. So kann das Kraftfahrzeug hochgefahren werden, wenn beispielsweise eine Fahrt durch unwegsames Gelände ansteht. Eine aufgrund der Änderung der Höhe des Kraftfahrzeugs eintretende Änderung des Abstands der Projektion zum Kraftfahrzeug kann mittels der Änderung der Abstrahlrichtung vermieden beziehungsweise ausgeglichen werden.

Alternativ ist auch eine Realisierung denkbar, bei der keine elektromechanischen Komponenten vorgesehen sind. In diesem Fall ist denkbar, dass die Abstrahlrichtung des mittels des wenigstens einen Leuchtmittels generierten Lichts mittels wenigstens einer bezüglich der Kühlkomponente nicht positionsveränderbaren und nicht schwenkbaren Optikeinheit vorgegeben wird.

Denkbar ist, dass die wenigstens eine Optikeinheit einen Reflektor umfasst. Bei dem Reflektor kann es sich um einen mittels eines, beispielsweise elektromechanischen, Aktors, insbesondere bezüglich der Position oder der Schwenkstellung, verstellbaren Spiegel oder verstellbares Prisma handeln. Denkbar ist auch, dass der Reflektor ein Freiformreflektor oder ein diffraktives optisches Element (DOE) ist.

Ergänzend wird angemerkt, dass die Beleuchtungseinrichtung, insbesondere die Bildgebereinrichtung und/oder die Optikeinheit, wenigstens ein strahlformendes Element, beispielsweise eine optische Linse, umfasst, mittels dem eine Strahlaufweitung oder -bündelung bei den mittels des Leuchtmittels erzeugten Lichtstrahlen realisierbar ist.

Die vorliegende Erfindung betrifft ferner eine Beleuchtungseinrichtung für ein Kraftfahrzeug, umfassend wenigstens ein Leuchtmittel zur Generierung von Licht. Erfindungsgemäß gelöst wird die Aufgabe bei einer solchen Beleuchtungseinrichtung dadurch, dass das wenigstens eine Leuchtmittel mit einer fahrzeugseitigen Kühlkomponente des Kraftfahrzeugs derart thermisch verbunden oder verbindbar ist, dass zur Kühlung des wenigstens einen Leuchtmittels Wärme von dem wenigstens einen Leuchtmittel zu der Kühlkomponente ableitbar ist. Alle im Zusammenhang mit dem erfindungsgemäßen Kraftfahrzeug erläuterten Vorteile, Merkmale und Aspekte sind gleichermaßen auf die erfindungsgemäße Beleuchtungseinrichtung übertragbar und umgekehrt.

Weitere Vorteile, Merkmale, Gesichtspunkte und Einzelheiten der vorliegenden Erfindung ergeben sich aus den nachfolgend dargelegten Ausführungsbeispielen sowie anhand der Figuren. Diese zeigen schematisch:
- Fig. 1: eine schematische Aufsicht auf ein erfindungsgemäßes Kraftfahrzeug gemäß einem Ausführungsbeispiel, umfassend mehrere erfindungsgemäße Beleuchtungseinrichtung gemäß jeweils einem Ausführungsbeispiel,
- Fig. 2: eine schematische Schnittdarstellung eines Abschnitts des erfindungsgemäßen Kraftfahrzeugs der Fig. 1 umfassend eine der erfindungsgemäßen Beleuchtungseinrichtungen, die gemäß einem ersten Ausführungsbeispiel realisiert ist,
- Fig. 3: eine schematische, perspektivische Darstellung einer weiteren der erfindungsgemäßen Beleuchtungseinrichtungen des Kraftfahrzeugs der Fig. 1, die gemäß einem zweiten Ausführungsbeispiel realisiert ist, und
- Fig. 4: eine schematische Schnittdarstellung eines Abschnitts des erfindungsgemäßen Kraftfahrzeugs der Fig. 1 umfassend eine der erfindungsgemäßen Beleuchtungseinrichtungen, die gemäß einem dritten Ausführungsbeispiel realisiert ist.

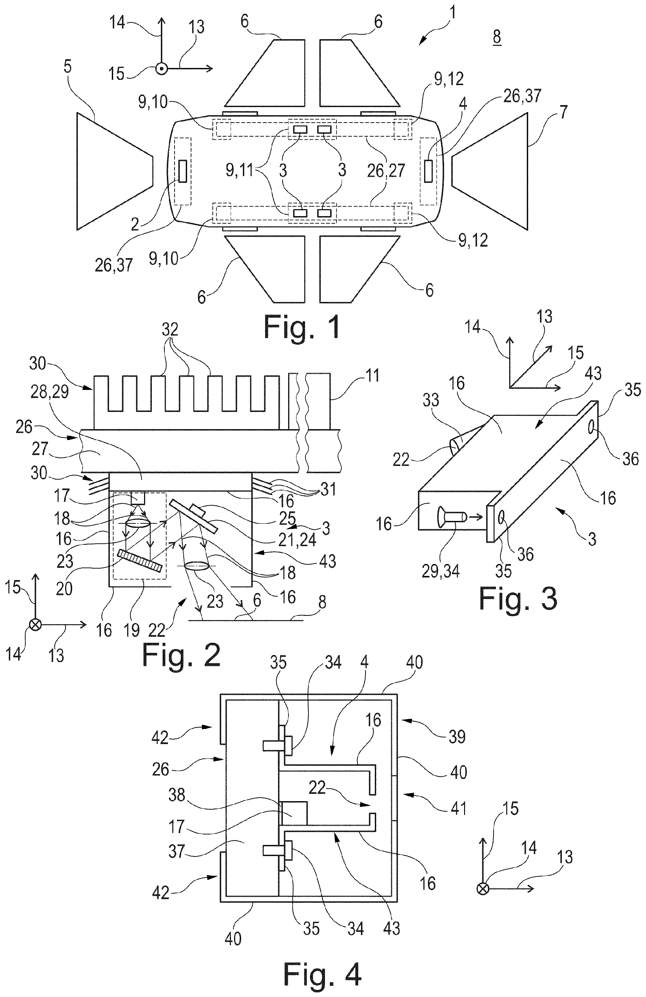

Fig. 1 zeigt eine Aufsicht auf ein erfindungsgemäßes Kraftfahrzeug 1 gemäß einem Ausführungsbeispiel, umfassend mehrere Beleuchtungseinrichtungen 2, 3, 4 gemäß jeweils einem Ausführungsbeispiel. Insgesamt sind sechs Beleuchtungseinrichtungen 2, 3, 4 vorgesehen, nämlich eine frontseitige Beleuchtungseinrichtung 2, vier seitliche Beleuchtungseinrichtungen 3 und eine heckseitig Beleuchtungseinrichtung 4.

Jede der Beleuchtungseinrichtungen 2, 3, 4 ist eine Projektionseinrichtung, mittels der jeweils eine Projektion 5, 6, 7 in einer Umgebung 8 des Kraftfahrzeugs 1 erzeugbar ist. Konkret handelt es sich bei der Projektionseinrichtung um eine Bodenprojektionseinrichtung, sodass die Projektionen 5, 6, 7 auf dem Boden in der Umgebung 8 erzeugbar sind. So ist mittels der frontseitigen Beleuchtungseinrichtung 2, die bezüglich der Fahrzeugquerrichtung insbesondere mittig angeordnet ist, die Projektion 5 entsprechend mittig auf den Boden vor dem Kraftfahrzeug 1 erzeugbar. Mittels der heckseitigen Beleuchtungseinrichtung 4, die bezüglich der Fahrzeugquerrichtung mittig angeordnet ist, ist die Projektion 7 entsprechend mittig auf den Boden hinter dem Kraftfahrzeug 1 erzeugbar. Denkbar ist jedoch eine außermittige Anordnung, etwa sofern an der mittigen Position bereits eine andere Komponente wie beispielsweise eine Anhängerkupplung vorgesehen ist. In diesem Fall kann die Projektion dennoch mittig erzeugt werden, bevorzugt unter Ausgleich einer aufgrund der geometrischen Gegebenheiten entstehenden Verzerrung der jeweiligen Projektion 5, 7. Jede der Projektionen 7 erstreckt sich beispielhaft innerhalb eines Bereichs auf dem Boden, der sich zwischen 0,3 m und 1,0 m vom Kraftfahrzeug 1 weg erstreckt.

Von den vier seitlich an dem Kraftfahrzeug 1 angeordneten Beleuchtungseinrichtungen 3 befinden sich jeweils zwei links- sowie rechtsseitig am Kraftfahrzeug 1. Seitlich entlang des Kraftfahrzeugs sind mehrere Fahrzeugsäulen 9 vorgesehen, nämlich an jeder der beiden Seiten jeweils eine A-Säule 10, jeweils eine B-Säule 11 und jeweils eine C-Säule 12. die beiden seitlichen Beleuchtungseinrichtungen 3 sind beide im Bereich unterhalb der B-Säule 11 angeordnet. Die mittels der seitlichen Beleuchtungseinrichtungen 3 generierbaren Projektionen 6 sind entlang der Fahrzeuglängsrichtung nebeneinander angeordnet. Alternativ ist denkbar, dass anstelle der beiden unterhalb der B-Säule 11 angeordneten Beleuchtungseinrichtungen 3 nur eine Beleuchtungseinrichtung vorgesehen ist, die sich entweder unterhalb der A-Säule 10 befindet und eine entsprechende Projektion nach hinten generiert, oder die sich unterhalb der C-Säule 12 befindet und eine entsprechende Projektion nach vorne generiert. Auch ist eine Variante denkbar, bei der jeweils eine Beleuchtungseinrichtung unterhalb der A-Säule 10 sowie unterhalb der C-Säule 12, und gegebenenfalls unterhalb der B-Säule 11, befindet. Die konkret beschriebene Anordnung hinsichtlich der Fahrzeugsäulen 9 ist lediglich beispielhaft zu verstehen. So ist gleichermaßen eine diesbezüglich versetzte Anordnung denkbar, etwa wenn im Bereich der Fahrzeugsäulen 9 Aufnahmepunkte für einen Wagenheber vorgesehen sind.

Nachfolgend werden vorliegend relevante Raumrichtungen bezüglich des Kraftfahrzeugs 1 eingeführt, wobei entsprechende Koordinatensysteme in den Figuren dargestellt sind. So weist eine Fahrzeuglängsrichtung 13 entlang einer Fahrzeuglängsachse nach hinten, eine Fahrzeugquerrichtung 14 entlang einer Fahrzeugquerachse nach rechts und eine Fahrzeughochrichtung 15 entlang einer Fahrzeughochachse nach oben.

Nachfolgend wird auf die Fig. 2 Bezug genommen, die eine äußerst schematische Schnittansicht durch den Bereich des Kraftfahrzeugs 1 zeigt, in dem eine der beiden seitlichen Beleuchtungseinrichtungen 3 angeordnet ist. Zunächst werden Details bezüglich der Beleuchtungseinrichtung 3 erläutert, die grundsätzlich allesamt auch auf die weiteren Beleuchtungseinrichtungen 2, 4 anwendbar sind.

So weist die Beleuchtungseinrichtung 3 ein Gehäuse 43 auf, in dem die Komponenten der Beleuchtungseinrichtung 3 angeordnet sind und das mehrere Wände 16 aufweist. Innerhalb des Gehäuses 43 ist ein mehrere Leuchtdioden umfassendes Leuchtmittel 17 vorgesehen, mittels dem Licht 18 unterschiedlicher Farben erzeugbar ist, dass letztlich die jeweils zugehörige Projektion 6 generiert.

Weiterhin umfasst die Beleuchtungseinrichtung 3 einen Mikrospiegelaktor 20 respektive DMD, der matrixförmig angeordnete Mikrospiegel mit einer Kantenlänge in der Größenordnung von Mikrometern umfasst, wobei sich die Mikrospiegel bezüglich ihrer Stellung mittels der Kraftwirkung elektrostatischer Felder einzeln verstellen lassen. Mittels des Mikrospiegelaktors 20 wird eine die Projektion 6 realisierende, farbige Bilddarstellung generiert. Das Leuchtmittel 17 und der eine Bildgebereinheit realisierende Mikrospiegelaktor 20 bildet eine ortsfest in dem Gehäuse 43 angeordnete Bildgebereinrichtung 19 der Beleuchtungseinrichtung 3, mittels der die mittels des Lichts 18 realisierte Bilddarstellung respektive Projektion 6 realisiert wird. Alternativ kann es sich bei der Bildgebereinheit um ein TFT-Element oder ein LCOS-Element oder einen MEMS-Spiegel handeln.

Weiterhin umfasst die Beleuchtungseinrichtung 3 einen Reflektor 21, der vorliegend ein Spiegel ist, mittels dem das mittels des Leuchtmittels 17 respektive mittels der Bildgebereinrichtung 19 erzeugte Licht 18 zu einer ein Austrittsfenster bildenden Austrittsöffnung 22 des Gehäuses 43 hin reflektierbar ist. Bei dem Reflektor 21 kann es sich auch um ein Prisma oder um einen Freiformreflektor oder um ein DOE handeln. Schließlich umfasst die Beleuchtungseinrichtung 3 strahlformende Elemente 23, nämlich optische Linsen, mittels denen eine Strahlaufweitung respektive -bündelung bei den mittels des Leuchtmittels 17 erzeugten Lichtstrahlen respektive dem Licht 18 realisierbar ist.

Da die Projektion 6 ortsveränderlich auf dem Boden 8 sein soll, umfasst die Beleuchtungseinrichtung 3 eine positionsveränderbare und/oder schwenkbare Optikeinheit 24, mittels der der Laufweg des Lichts 18 beeinflussbar ist und die durch den Reflektor 21 gebildet wird. Zur Einstellung der jeweiligen Position respektive Schwenkstellung der Optikeinheit 24 ist diese mit einem elektromechanischen Aktor 25 verbunden, der mittels den Steuersignalen einer nicht näher gezeigten Steuerungseinrichtung des Kraftfahrzeugs 1 zur Einstellung der jeweils gewünschten Position beziehungsweise Schwenkstellung der jeweiligen Optikeinheiten 24 ansteuerbar ist. Alternativ kann die Optikeinheit 24 ortsfest im Gehäuse 43 angeordnet sein

Unter erneuter Bezugnahme auf die Fig. 2 werden nachfolgend Aspekte bezüglich der mechanischen Anbindung der Beleuchtungseinrichtung 3 erläutert. Diese mechanische Anbindung erfolgt im Rahmen der vorliegenden Erfindung derart, dass zwischen dem Leuchtmittels 17 und einer Kühlkomponente 26 des Kraftfahrzeugs 1 eine thermische Verbindung derart gegeben ist, dass aufgrund der Ableitung von Wärme von dem Leuchtmittels 17 auf die Kühlkomponente 26 eine Kühlung des Leuchtmittels realisiert wird. Das Leuchtmittels 17 ist hierbei ortsfest bezüglich der Kühlkomponente 26 angeordnet.

Bei der Kühlkomponente 26 handelt es sich vorliegend um einen Abschnitt einer Karosserie des Kraftfahrzeugs 1, nämlich um einen Tür- respektive Fahrzeugschweller 27, der sich entlang der Längsrichtung 13 erstreckt. Die genannte Wärmeübertragung von dem Leuchtmittels 17 zum Fahrzeugschweller 27 wird dadurch realisiert, dass das Leuchtmittels 17 und eine an der Kühlkomponente 26 befestigte Komponente, nämlich eine Haltevorrichtung 28, gegenüberliegend an einer der Wände 16 angeordnet ist. Da das Gehäuse 43 aus einem Metall besteht, erfolgt somit eine effektive Übertragung der Wärme von dem Leuchtmittels 17 zur Haltevorrichtung 28 und, da die Haltevorrichtung 28 ebenfalls aus einem Metall besteht, zu der Kühlkomponente 26. So betrifft ein weiterer Aspekt dieses Ausführungsbeispiels den Umstand, dass die Ableitung der Wärme von dem Leuchtmittels 17 zu der Kühlkomponente 26 dadurch realisiert sowie verstärkt wird, dass die Beleuchtungseinrichtung 3 und mithin das Leuchtmittel 17 mittels eines Befestigungsmittels 29, dass mit der Kühlkomponente entsprechend thermisch verbunden ist und durch die Haltevorrichtung 28 gebildet wird, an der Kühlkomponente 26 befestigt ist. die in der Fig. 2 nur symbolhaft angedeutete Haltevorrichtung 28 ist ein gebogenes Metallblech das einerseits mit dem der Beleuchtungseinrichtung 3 und andererseits mit der Kühlkomponente 26 verbunden ist. Die das Gehäuse 43 der Beleuchtungseinrichtung 3 wird beispielhaft von einem Abschnitt der Haltevorrichtung 28 klammerartig umgriffen. Die Haltevorrichtung ist an der Kühlkomponente 26 mittels einer in Fig. 2 nicht näher gezeigten Schraube befestigt.

Ein weiterer Gesichtspunkt im Rahmen des anhand der Fig. 2 gezeigten Ausführungsbeispiel betrifft eine Verstärkung des bezüglich des Leuchtmittels 17 entstehenden Kühleffekt dadurch, dass sowohl die Kühlkomponente 26 als auch eine mit der Kühlkomponente 26 thermisch verbundene Komponente, nämlich die Haltevorrichtung 28, ein Kühlelement 30 umfasst, dass Kühlfinnen 31 beziehungsweise Kühlrippen 32 aufweist. Das Kühlelement 30 der Kühlkomponente 26 ist eine separate Komponente, die an einer der Beleuchtungseinrichtung 3 abgewandten Seite der Kühlkomponente 26 angeordnet ist. Das Kühlelement 30 der Haltevorrichtung 28 ist stattdessen seitlich an diesem angeordnet. Mittels des Kühlelement 30 wird von dem Leuchtmittels 17 stammende Wärme an ein Kühlfluid abgegeben, dass eine aufgrund des Fahrtwinds entstehende, an den jeweiligen Kühlfinnen 31 beziehungsweise Kühlrippen 32 entlangströmende Umgebungsluft ist. Alternativ kann das Kühlfluid in ein aktives Kühlsystem des Kraftfahrzeugs 1, etwa einem Kühlkreislauf, eingebunden sein.

Nachfolgend wird unter Bezugnahme auf Fig. 3 ein zweites Ausführungsbeispiel der Beleuchtungseinrichtung 3 erläutert. Grundsätzlich gelten die anhand der Fig. 2 erläuterten Gesichtspunkte gleichermaßen für das in Fig. 3 gezeigte Ausführungsbeispiel. So umfasst die Beleuchtungseinrichtung 3 gemäß Fig. 3 ebenfalls ein Gehäuse 43, dessen Austrittsöffnung 22 jedoch an einen schräg von den Wänden 16 abstehenden, tubusartigen Gehäuseabschnitt 33 angeordnet ist, was eine wesentlich schrägere Abstrahlrichtung des Lichts 18 im Vergleich zu dem anhand der Fig. 2 erläuterten Ausführungsbeispiel ermöglicht, sodass diese Beleuchtungseinrichtung 3 insbesondere unterhalb der C-Säule 12 angeordnet sein kann.

Auch die anhand der Fig. 3 erläutert die Beleuchtungseinrichtung 3 ist mittels mehrerer Befestigungsmittel 29 an der in der Fig. 3 nicht gezeigten Kühlkomponente 26 befestigbar, wobei es sich bei den Befestigungsmittel 29 um Schrauben 34 handelt. Weiterhin ist vorgesehen, dass eine Verstärkung der Ableitung der Wärme von dem Leuchtmittel 17 zur Kühlkomponente 26 dadurch erfolgt, dass die Beleuchtungseinrichtung 3, vorliegend konkret das Gehäuse 43, seitliche Flansche 35 aufweist, die mit der Kühlkomponente 26 in Berührkontakt stehen. Die Flansche 35 bilden jeweils eine ebene Fortsetzung derjenigen, in der Fig. 3 rechts dargestellten, Wand 16, die mit der Kühlkomponente 26 einerseits und dem in Fig. 3 nicht gezeigten Leuchtmittels 17 andererseits in Berührkontakt steht. Weiterhin weisen die Flansche 35 jeweils eine Bohrung 36 auf, die mit in der Fig. 3 nicht gezeigten Bohrungen der Kühlkomponente 26 fluchten und die von jeweils einer der Schrauben 34 durchsetzt werden. Die Bohrungen der Kühlkomponente 26 weisen jeweils ein Innengewinde auf, in das ein Außengewinde der jeweiligen Schraube 34 eingreift.

Fig. 4 zeigt eine schematische Schnittdarstellung eines Abschnitts des Kraftfahrzeugs der Fig. 1 umfassend eine der Beleuchtungseinrichtungen 4, die gemäß einem dritten Ausführungsbeispiel realisiert ist, wobei es sich hierbei um die heckseitige Beleuchtungseinrichtung 4 handelt. Abgesehen von den nachfolgend dargelegten Unterschieden gelten die im Zusammenhang mit den Figuren 2 und 3 erläuterten Merkmale grundsätzlich gleichermaßen für das in der Fig. 4 gezeigte Ausführungsbeispiel.

So handelt es sich bei der Kühlkomponente 26, an der die Beleuchtungseinrichtung 4 vergleichbar wie bei dem Ausführungsbeispiel der Fig. 3 mittels Schrauben 34 befestigt ist, um einen Stoßfänger 37 des Kraftfahrzeugs 1, der aus einem Metall besteht und auch als Stoßstange bezeichnet werden kann. Somit gelten die für die heckseitige Beleuchtungseinrichtung 4 hier erläuterten Gesichtspunkte grundsätzlich gleichermaßen für die frontseitige Beleuchtungseinrichtung 2, wobei für diese die Fig. 4 in entsprechend um eine Vertikalachse gespiegelter beziehungsweise um 180° gedrehter Variante gilt.

Bezüglich des Gehäuses 43 der anhand der Fig. 4 erläuterten Variante ist vorgesehen, dass dieses bezüglich der der Kühlkomponente 26 zugewandten Seite hin offen ist. Bezüglich der innerhalb des Gehäuses 43 angeordneten Komponenten ist der Übersichtlichkeit halber lediglich das Leuchtmittel 17 gezeigt. Dieses ist an einer der Wände 16 des Gehäuses mittels nicht näher gezeigter Befestigungsmittel befestigt und befindet sich im Bereich der offenen Seite des Gehäuses 43 derart, dass dieses mit der Kühlkomponente 26 in Berührkontakt steht. Obgleich diesbezüglich ein unmittelbarer Berührkontakt denkbar ist, ist beim vorliegenden Ausführungsbeispiel zwischen der Kühlkomponente 26 und dem Leuchtmittels 17 eine Schicht 38 bestehend aus einer Wärmeleitpaste angeordnet.

Nachfolgend wird unter erneuter Bezugnahme auf die Fig. 4 ein weiterer Aspekt bezüglich dieses Ausführungsbeispiels erläutert, dass jedoch ausdrücklich auch bei den anhand der Figuren 2 und 3 erläuterten Varianten betreffend den Fahrzeugschweller 27 vorgesehen sein kann. So ist die Kühlkomponente 26 respektive der Stoßfänger 37 mittels eines verteilten Kleidungsteils 39 bestehend aus einem Kunststoff verkleidet, wobei die Beleuchtungseinrichtung 4 zwischen der Kühlkomponente 26 und dem Verkleidungsteils 39 respektive einer Wandung 40 des Verkleidungsteils 39 angeordnet ist. Folglich verkleidet beziehungsweise bedeckt das Verkleidungsteil 39 nicht nur die Kühlkomponente 26, sondern auch die Beleuchtungseinrichtung 4. Das Verkleidungsteil 39 umfasst eine eine Öffnung respektive ein Fenster bildende Ausnehmung 41, die mit der Austrittsöffnung 22 des Gehäuses 43 fluchtet, sodass das von der Beleuchtungseinrichtung 4 abgestrahlte Licht durch die Ausnehmung 41 nach außen austritt. Der Ausnehmung 41 gegenüberliegend umfasst das Verkleidungsteil 39 einen Befestigungsabschnitt 42, der zu Halterungszwecken die Kühlkomponente 26 klammerartig umgreift.

## Patentansprüche

1. Kraftfahrzeug (1), umfassend eine Beleuchtungseinrichtung (2, 3, 4) mit wenigstens einem Leuchtmittel (17) zur Generierung von Licht (18), **dadurch gekennzeichnet,**
**dass** das wenigstens eine Leuchtmittel (17) mit wenigstens einer fahrzeugseitigen Kühlkomponente (26) des Kraftfahrzeugs (1) derart thermisch verbunden ist, dass zur Kühlung des wenigstens einen Leuchtmittels (17) Wärme von dem wenigstens einen Leuchtmittel (17) zu der wenigstens einen Kühlkomponente (26) ableitbar ist.

2. Kraftfahrzeug (1) nach Anspruch 1,
**dadurch gekennzeichnet,**
**dass** die Beleuchtungseinrichtung (2, 3, 4) ein Gehäuse (15) aufweist, in das das wenigstens eine Leuchtmittel (17) aufgenommen ist, wobei die Ableitung der Wärme dadurch realisiert oder verstärkt wird,
- **dass** das wenigstens eine Leuchtmittel (17) und die Kühlkomponente (26) und/oder eine mit der Kühlkomponente (26) thermisch verbundene Komponente, über die die Ableitung der Wärme von dem wenigstens einen Leuchtmittel zu der wenigstens einen Kühlkomponente erfolgt,
gegenüberliegend an einer Wand des Gehäuses (15) angeordnet sind,
und/oder
- **dass** das Gehäuse (15) zu wenigstens einer Seite hin offen ist, wobei das wenigstens eine, mit der Kühlkomponente (26) und/oder mit der oder einer mit der Kühlkomponente (26) thermisch verbundenen Komponente, über die die Ableitung der Wärme von dem wenigstens einen Leuchtmittel zu der wenigstens einen Kühlkomponente erfolgt, in Berührkontakt stehende Leuchtmittel (17) im Bereich der offenen Seite angeordnet ist.

3. Kraftfahrzeug (1) nach Anspruch 1 oder 2,
**dadurch gekennzeichnet,**
**dass** die Ableitung der Wärme dadurch realisiert oder verstärkt wird, dass das wenigstens eine Leuchtmittel (17) und/oder die Beleuchtungseinrichtung (2, 3, 4) mittels wenigstens eines Befestigungsmittels (29) an der Kühlkomponente (26) und/oder der oder einer mit der Kühlkomponente (26) thermisch verbundenen Komponente, über die die Ableitung der Wärme von dem wenigstens einen Leuchtmittel zu der wenigstens einen Kühlkomponente erfolgt, befestigt ist.

4. Kraftfahrzeug (1) nach Anspruch 3,
**dadurch gekennzeichnet,**
**dass** das wenigstens eine Befestigungsmittel (29) wenigstens eine Schraube (34) oder eine Haltevorrichtung (28) ist.

5. Kraftfahrzeug (1) nach einem der vorangehenden Ansprüche,
**dadurch gekennzeichnet,**
**dass** die Ableitung der Wärme dadurch realisiert oder verstärkt wird, dass die Beleuchtungseinrichtung (2, 3, 4), insbesondere das oder ein Gehäuse (15) der Beleuchtungseinrichtung (2, 3, 4), wenigstens einen Flansch (35) aufweist, der mit der Kühlkomponente (26) und/oder mit der oder einer mit der Kühlkomponente (26) thermisch verbundenen Komponente, über die die Ableitung der Wärme von dem wenigstens einen Leuchtmittel zu der wenigstens einen Kühlkomponente erfolgt, in, insbesondere unmittelbarem, Berührkontakt steht.

6. Kraftfahrzeug (1) nach einem der vorangehenden Ansprüche,
**dadurch gekennzeichnet,**
**dass** der aufgrund der Ableitung der Wärme entstehende Kühleffekt dadurch verstärkt wird, dass die Kühlkomponente (26) und/oder die oder eine mit der Kühlkomponente (26) thermisch verbundene Komponente, über die die Ableitung der Wärme von dem wenigstens einen Leuchtmittel zu der wenigstens einen Kühlkomponente erfolgt, wenigstens ein Kühlelement (30), umfassend insbesondere wenigstens eine Kühlfinne (31) und/oder Kühlrippe (32), mittels der die Wärme an ein Kühlfluid, das insbesondere eine Umgebungsluft ist oder in einer aktiven Kühlung des Kraftfahrzeugs (1) eingebunden ist, abgebbar ist.

7. Kraftfahrzeug (1) nach einem der vorangehenden Ansprüche,
**dadurch gekennzeichnet,**
**dass** die Kühlkomponente (26) ein Abschnitt oder eine Komponente einer Karosserie des Kraftfahrzeugs (1) ist.

8. Kraftfahrzeug (1) nach Anspruch 7,
**dadurch gekennzeichnet,**
**dass** die Kühlkomponente (26) ein Fahrzeugschweller (27) ist, wobei die Beleuchtungseinrichtung (2, 3, 4) insbesondere unterhalb einer Fahrzeugsäule (9) angeordnet ist.

9. Kraftfahrzeug (1) nach einem der vorangehenden Ansprüche,
**dadurch gekennzeichnet,**
**dass** die Kühlkomponente (26) ein Stoßfänger (37) des Kraftfahrzeugs (1) ist.

10. Kraftfahrzeug (1) nach einem der vorangehenden Ansprüche,
**dadurch gekennzeichnet,**
**dass** die Kühlkomponente (26) mittels eines Verkleidungsteils (39), bestehend insbesondere aus einem Kunststoff, verkleidet ist, wobei die Beleuchtungseinrichtung (2, 3, 4) zwischen der Kühlkomponente (26) und dem Verkleidungsteil (39) oder einem Abschnitt des Verkleidungsteils (39) angeordnet ist.

11. Kraftfahrzeug (1) nach einem der vorangehenden Ansprüche,
**dadurch gekennzeichnet,**
**dass** die Beleuchtungseinrichtung (2, 3, 4) eine Projektionseinrichtung ist, mittels der eine Projektion (5, 6, 7) auf einer Projektionsfläche in einer Umgebung (8) des Kraftfahrzeugs (1) erzeugbar ist.

12. Kraftfahrzeug (1) nach Anspruch 11,
**dadurch gekennzeichnet,**
**dass** die Projektionseinrichtung eine Bodenprojektionseinrichtung ist, mittels der die Projektion (5, 6, 7) auf einem, insbesondere vor, hinter oder neben dem Kraftfahrzeug (1) angeordneten, Boden in der Umgebung (8) des Kraftfahrzeugs (1) erzeugbar ist.

13. Kraftfahrzeug (1) nach einem der vorangehenden Ansprüche,
**dadurch gekennzeichnet,**
**dass** das wenigstens eine Leuchtmittel (17) bezüglich der Kühlkomponente (26) ortsfest angeordnet ist, wobei eine Abstrahlrichtung des mittels des wenigstens einen Leuchtmittels (17) generierten Lichts (18) mittels wenigstens einer bezüglich der Kühlkomponente (26) positionsveränderbaren und/oder schwenkbaren Optikeinheit (24), mittels der ein Laufweg des Lichts (18) beeinflussbar ist, beeinflussbar ist.

14. Kraftfahrzeug (1) nach Anspruch 13,
**dadurch gekennzeichnet,**
**dass** die wenigstens eine Optikeinheit (24) einen Reflektor (21) umfasst, der insbesondere ein mittels eines Aktors (25) verstellbarer Spiegel oder verstellbares Prisma oder einen Freiformreflektor ist.

15. Beleuchtungseinrichtung (2, 3, 4) für eine Kraftfahrzeug (1), umfassend wenigstens ein Leuchtmittel (17) zur Generierung von Licht (18), **dadurch gekennzeichnet,**
**dass** das wenigstens eine Leuchtmittel (17) mit einer fahrzeugseitigen Kühlkomponente (26) des Kraftfahrzeugs (1) derart thermisch verbunden oder verbindbar ist, dass zur Kühlung des wenigstens einen Leuchtmittels (17) Wärme von dem wenigstens einen Leuchtmittel (17) zu der Kühlkomponente (26) ableitbar ist.
